# EUROPÄISCHE PATENTSCHRIFT

(11) **EP 3 088 752 B1**
(45) Veröffentlichungstag und Bekanntmachung des Hinweises auf die Patenterteilung: **28.02.2018**
(21) Anmeldenummer: 16165092.4
(22) Anmeldetag: 13.04.2016
(51) Int. Cl.: F16B 13/14

(54) **VERBUNDANKER SOWIE VERBUNDANKERSYSTEM**
COMPOSITE ANCHOR AND COMPOSITE ANCHOR SYSTEM
CLAVETTE ET SYSTEME DE CLAVETTE

(30) Priorität: 30.04.2015 DE 102015106719
(43) Veröffentlichungstag der Anmeldung: 02.11.2016
(73) Patentinhaber: Dr. Li Anchor Profi GmbH, 72250 Freudenstadt (DE)
(72) Erfinder: LI, Longfei, 72250 Freudenstadt (DE)
(74) Vertreter: Mammel und Maser

(56) Entgegenhaltungen:
- EP-B1- 0 867 624

## Beschreibung

Die Erfindung betrifft einen Verbundanker zur Verankerung in einer Ausnehmung eines Befestigungsgrundes mittels einer aushärtbaren Verbundmasse, bestehend aus einem Schaft, welcher zu einem Einsteckende hin einen Verankerungsabschnitt und an einem dem Einsteckende gegenüberliegenden Ende einen Anschlussabschnitt aufweist, wobei der Verankerungsabschnitt wenigstens einen Konusabschnitt und einen Gegenkonusabschnitt aufweist, die gegensätzlich zueinander ausgerichtet sind und eine dazwischen liegende Einschnürung bilden und wenigstens jeweils zwei sich paarweise einander gegenüberstehende Konus- und Gegenkonusabschnitte vorgesehen sind sowie ein Verbundankersystem zur Verankerung eines Verbundankers in einer Ausnehmung eines Befestigungsgrundes.

Aus der EP 1 397 601 B1 geht ein Verbundanker zur Verankerung in einem Bohrloch eines Bauteils mittels einer Verbundmasse hervor. Dieser Verbundanker weist mehrere axial hintereinander angeordnete Einschnürungen auf, welche durch konusförmige Abschnitte gebildet sind. Die konusförmigen Abschnitt sind mittels zylindrischer Abschnitte zueinander beabstandet, wobei die axiale Länge der zylindrischen Abschnitte dem 0,5-fachen bis 2,0-fachen der axialen Länge des sich an den jeweiligen zylindrischen Abschnitts anschließenden Konusabschnitts entspricht. Durch diese Ausgestaltung der Einschnürungen des Verbundankers ist nach beim Einsetzen in ein Bohrloch und dem Aushärten der Verbundmasse eine längere Mörtelschale zwischen dem Bohrloch und dem Verbundanker gebildet, welche eine dickere Wandung im Bereich des zylinderförmigen Abschnitts aufweist. Dies bedingt jedoch das Einbringen einer vergleichsweise großen Menge Verbund- oder Mörtelmasse, um einen Ringspalt zwischen dem Verbundanker und dem Bohrloch vollständig auszufüllen.

Aus der EP 0 356 425 B1 geht ein Verbundanker für einen Kunstharzklebeanker hervor, der mehrere axial in Reihe angeordnete Einschnürungen aufweist. Diese Einschnürungen sind durch einen Konusabschnitt und einen Gegenkonusabschnitt gebildet, wobei sich an einen kleinsten Durchmesser des Gegenkonusabschnitts der Einschnürung unmittelbar der sich erweiternde Konusabschnitt anschließt.

Aus der EP 0 352 226 B1 geht ein Verbundanker zur Verankerung in einer Ausnehmung eines Bauteils hervor, welcher lediglich eine Einschnürung aufweist, die durch zwei gegensätzlich zueinander ausgerichtete, konusförmige Abschnitte gebildet ist. Durch diesen Verbundanker sind nur geringere Zugkräfte aufnehmbar.

Die EP 0 967 402 B1 offenbart einen Verbundanker für ein Verbundankersystem, bei welchem mehrere axial hintereinander angeordnete Einschnürungen vorgesehen sind. Die Einschnürungen sind durch konusförmige Erweiterungen gebildet, an deren größten Umfang einseitige Abflachungen vorgesehen sind.

Aus der EP 0 867 624 B1 ist ein Verbundanker bekannt, der mehrere axial hintereinander angeordnete Einschnürungen aufweist, wobei jede Einschnürung durch lediglich eine konusförmige Erweiterung gebildet ist.

Der Erfindung liegt die Aufgabe zugrunde, einen Verbundanker sowie ein Verbundankersystem zu schaffen, durch welche große Zugkräfte, insbesondere bei einem möglichst geringen Einsatz von Verbund- oder Mörtelmasse, aufnehmbar sind.

Diese Aufgabe wird erfindungsgemäß durch einen Verbundanker gelöst, bei welchem der Konusabschnitt und der Gegenkonusabschnitt einen Öffnungswinkel zur Einschnürung im Bereich von 140° bis 155° bilden. Durch diesen zwischen den konusförmigen Abschnitten gebildeten Öffnungswinkel wird eine geringe Kerbwirkung erzielt, aufgrund derer eine höhere Belastung des Verbundankers erreicht wird. Zudem bewirkt dieser Öffnungswinkel bei einer Zugbelastung des Verbundankers eine Spreizung der ausgehärteten Verbundmasse, wodurch eine hohe formschlüssige Verspannung zwischen dem Verankerungsabschnitt des Verbundankers und einer Wandung der Ausnehmung ausgebildet ist.

Bevorzugt ist ein Öffnungswinkel im Bereich von 142° bis 152°, in welchem die Wirkung weiter verbessert wird.

Eine vorteilhafte Ausgestaltung des Verbundankers sieht vor, dass die Einschnürung durch einen zylinderförmigen Abschnitt gebildet ist und ein Verhältnis zwischen einer axialen Länge a des zylinderförmigen Abschnitts der Einschnürung und einer axialen Länge aₖ des Konusabschnitts von kleiner 0,5 vorgesehen ist. Durch das Längenverhältnis zwischen dem zylinderförmigen Abschnitt und dem Konusabschnitt ist eine Einschnürung gebildet, bei welcher der zylinderförmige Abschnitt gegenüber dem Konusabschnitt eine möglichst kurze axiale Länge aufweist. Dadurch werden möglichst kleine Einschnürungen an dem Schaft gebildet, die beim Einsetzen des Verbundankers in die Ausnehmung, insbesondere ein maschinell hergestelltes Bohrloch, mit weniger Verbund- oder Mörtelmasse aufgefüllt werden müssen. Zudem ist durch die kleine Einschnürung ein größerer Schaftquerschnitt im Bereich der Einschnürung gegeben, aus der eine erhöhte Belastbarkeit des Verbundankers resultiert. Der zylinderförmige Abschnitt ermöglicht eine vereinfachte Fertigung des Verbundankers, bei welcher zudem ein fließender Übergang vom Konusabschnitt zum Zylinderabschnitt und vom Zylinderabschnitt zum Gegenkonusabschnitt erreicht wird. Daraus resultiert eine geringe Kerbwirkung, aufgrund derer eine höhere Belastbarkeit des Verbundankers erreicht ist.

Eine weitere vorteilhafte Ausgestaltung des Verbundankers sieht vor, dass die Einschnürung durch einen hyperbolischen Zylinderabschnitt gebildet ist, der vorzugsweise einen Flankenradius R in einem Bereich von 0,5 mm bis 5 mm aufweist. Auch bei dieser Ausgestaltung werden möglichst kleine Einschnürungen an dem Schaft gebildet, die beim Einsetzen des Verbundankers in die Ausnehmung mit weniger Verbund- oder Mörtelmasse aufgefüllt werden müssen. Im Übrigen werden durch den hyperbolischen Zylinderabschnitt dieselben Vorteile wie bei der zuvor beschriebenen Ausführungsform erreicht.

In einer bevorzugten Ausführung des Verbundankers ist vorgesehen, dass zwischen zwei benachbarten Einschnürungen gegeneinander liegende Konus- und Gegenkonusabschnitte eine zylinderförmige Erweiterung bilden, welche vorzugsweise einem maximalen Durchmesser des Schafts entspricht. Durch diese zylinderförmige Erweiterung, insbesondere deren axialer Länge, wird eine gleichmäßige Lastverteilung auf die ausgehärtete Verbundmasse in der Ausnehmung erreicht, da die im Halbschnitt gezahnte Verbundmasse im Bereich der zylinderförmigen Erweiterungen breitere und deshalb stabilere Zähne ausbildet. Auf diese Weise sind durch den Verbundanker höhere Zuglasten aufnehmbar.

In einer bevorzugten Ausgestaltung des Verbundankers ist vorgesehen, dass zwischen einer von der fiktiven Mantelfläche des Schafts ausgehenden radialen Einschnürungstiefe s der Einschnürung und einem Durchmesser dᵢ der Einschnürung ein Verhältnis im Bereich von 0,1 bis 0,5 gebildet ist. Aufgrund dieses Verhältnisses wird beim Fertigungsprozess eine geringere Menge Material von einem ursprünglich zylindrischen Schaft abgetragen beziehungsweise abgedrängt, um die Einschnürungen im Befestigungsabschnitt zu formen. Daraus resultiert eine geringere Bearbeitungszeit für die Herstellung des Verbundankers und folglich geringere Herstellungskosten. Zudem bedingt die geringe Einschnürungstiefe einen verminderten Einsatz von Verbundmasse beim Einsetzen des Verbundankers in die Ausnehmung.

Eine weitere bevorzugte Ausgestaltung des Verbundankers sieht vor, dass zwischen einem maximalen Durchmesser des Konusabschnitts, welcher benachbart zum Einsteckende des Schafts angeordnet ist, und dem Durchmesser des Schafts ein Verhältnis im Bereich von 1,0 bis 1,2 gebildet ist. Dadurch ist der zum Einsteckende des Verbundankers benachbart angeordnete Konusabschnitt gegenüber den übrigen Konusabschnitten des Verbundankers vergrößert, sodass ein vergrößerter Endkopf des Verbundankers gebildet ist, der eine nochmals erhöhte formschlüssige Verspannung zwischen dem Verankerungsabschnitt und der Ausnehmung ermöglicht.

Der Verbundankersieht in einer bevorzugten Ausgestaltung vor, dass die minimalen Durchmesser der Konusabschnitte und/oder der Gegenkonusabschnitte zum Einsteckende des Schafts hin abnehmen. Damit weist der zum Einsteckende benachbart angeordnete zylindrische oder hyperbolische Abschnitt den geringsten Durchmesser auf, sodass die Verbundmasse im Bereich dieses zylindrischen oder hyperbolischen Abschnitts die größte Wandungsdicke aufweist. Bei einer Zugbelastung des Verbundankers wird dem Konusabschnitt durch die Verbundmasse in diesem Bereich der größte Widerstand entgegengesetzt. Dagegen weist der dem Einsteckende am weitesten entfernte zylindrische oder hyperbolische Abschnitt den größten Durchmesser der jeweiligen zylindrischen oder hyperbolischen Abschnitte auf, sodass durch den Querschnitt dieses Abschnitts die Tragfähigkeit des Verbundankers im Wesentlich bestimmt ist.

Eine weitere bevorzugte Ausgestaltung des Verbundankers sieht vor, dass der maximale Durchmesser der Konusabschnitte und/oder der Gegenkonusabschnitte jeweils gleich groß ist. Vorzugsweise entspricht der maximale Durchmesser der Konus- und Gegenkonusabschnitte dem Querschnitt des Schafts, sodass beim Herstellungsprozess des Verbundankers kein Materialabtrag im Bereich der Erweiterungen erfolgen muss.

Der Verbundanker sieht in einer vorteilhaften Weiterbildung vor, dass ein axialer Konuswinkel β der Konusabschnitte und/oder der Gegenkonusabschnitte in einem Bereich von 10° bis 20° liegt, insbesondere in einem Bereich von 11° bis 15°. Durch diesen Winkel wird eine Spreizung der Verbundmasse bei einer Zugbelastung des Verbundankers erreicht, welche eine besonders hohe formschlüssige Verspannung zwischen dem Befestigungsabschnitt des Verbundankers und der Ausnehmung ausbildet.

Eine weitere vorteilhafte Weiterbildung des Verbundankers sieht vor, dass an einem Endkopf oder an wenigstens einer Erweiterung des Verankerungsabschnitts eine Rändelung oder längs verlaufende Rillen vorgesehen sind. Die Rändelung verhindert eine Rotation des Verbundankers um dessen Längsachse in der ausgehärteten Verbundmasse, wenn diese mit einem Drehmoment belastet wird. Dies wird dadurch erreicht, dass die Rändelung eine Vielzahl von Rillen aufweist, durch welche eine Verzahnung zwischen dem Verbundanker und der ausgehärteten Verbundmasse ausgebildet ist. Statt der Rändelung kann diese Verzahnung auch durch längs verlaufende Rillen oder Zähne gebildet sein.

Eine bevorzugte Ausgestaltung des Verbundankers sieht vor, dass zumindest der Verankerungsabschnitt, vorzugsweise der gesamte Verbundanker, eine Beschichtung oder Ummantelung aufweist. Dadurch ist zumindest zwischen dem Verankerungsabschnitt und der ausgehärteten Mörtelmasse eine nicht haftende Oberfläche gebildet, durch welche bei einer axialen Belastung eine Ablösung des Verbundankers von der ausgehärteten Mörtelmasse ermöglicht ist. Durch diese Ablösung wird die ausgehärtete Mörtelschale von den sich in Achsrichtung bewegenden Konusabschnitten aufgeweitet und gegen die Bohrlochwand gepresst, wodurch eine besonders hohe Verspannung zwischen der Mörtelmasse und der Wandung der Ausnehmung erreicht ist. Ist die Beschichtung auch im Bereich des Befestigungsabschnitts des Verbundankers vorgesehen, wird eine Kaltverschweißung zwischen dem Befestigungsabschnitt und einem an dem Befestigungsabschnitt angebrachten, beispielsweise aufgeschraubten Bauteil vermieden. Die Beschichtung kann beispielsweise durch eine Tauchbeschichtung aufgebracht werden.

Die Aufgabe der Erfindung wird des Weiteren durch ein Verbundankersystem zur Verankerung eines Verbundankers in einer Ausnehmung eines Befestigungsgrundes, insbesondere mit einem Verbundanker nach einer der zuvor beschriebenen Ausführungsformen in einem Bohrloch eines Befestigungsgrundes aus Beton, gelöst, bei welchem zwischen einem fiktiven Ringvolumen ΔV, welches einem Raumvolumen zwischen einer Mantelfläche eines Konusabschnitts, eines Gegenkonusabschnitts und einer Einschnürung sowie einer fiktiven Mantelfläche eines Schafts im Bereich der Einschnürung entspricht, und einem Bohrlochvolumen V, welches durch das durch die Größe des Verbundankers vorgegebene Bohrloch bestimmt ist, ein Verhältnis im Bereich von 0,05 bis 0,20 gebildet ist. Durch dieses Verhältnis wird erreicht, dass das durch die Einschnürungen gebildete fiktive Ringvolumen ΔV, welches beim Einsetzen des Verbundankers in das Bohrloch mit Verbundmasse ausgefüllt wird, ein möglichst geringes Raumvolumen einnimmt. Dadurch muss weniger Verbundmasse in das Bohrloch eingefüllt werden. Trotz des geringeren Einsatzes von Verbundmasse, sind durch den Verbundanker vergleichbar hohe Zugbelastungen aufnehmbar. Der Befestigungsgrund, in welchem die Ausnehmung, insbesondere das Bohrloch vorgesehen ist, kann aus Beton ausgebildet sein.

Eine vorteilhafte Weiterbildung des Verbundankersystems sieht vor, dass zwischen einer Ringspaltfläche, welche zwischen dem Schaft eines Distanzabschnitts und dem vorgegebenen Bohrloch gebildet ist, und einer Querschnittsfläche des Schafts des Verbundankers, ein Verhältnis im Bereich von 0,1 bis 0,3 gebildet ist. Mit dem Einsatz einer reduzierten Menge von Verbundmasse geht nach dem Aushärten der Verbundmasse eine Verringerung der formschlüssigen Verspannung zwischen dem Verbundanker und dem Bohrloch einher. Diese wird dadurch ausgeglichen, dass das Verhältnis zwischen der Ringspaltfläche und der Querschnittsfläche des Schafts einen Wert zwischen 0,1 und 0,3 beträgt.

Die Erfindung sowie weitere vorteilhafte Ausführungsformen und Weiterbildungen derselben werden im Folgenden anhand der in den Zeichnungen dargestellten Beispiele näher beschrieben und erläutert. Die der Beschreibung und den Zeichnungen zu entnehmenden Merkmale können einzeln für sich oder zu mehreren in beliebiger Kombination erfindungsgemäß angewandt werden. Es zeigen:
Figur 1 eine schematische Schnittansicht eines erfindungsgemäßen Verbundankers,
Figur 2 eine schematische Schnittansicht eines alternativen Verbundankers gemäß Figur 1,
Figur 3 eine schematische Schnittansicht eines Verbundankersystems mit einem alternativen Verbundanker gemäß Figur 1 in einer Ausnehmung eines Befestigungsgrundes und
Figur 4 eine schematische Schnittansicht des Verbundankersystems in der Ausnehmung des Befestigungsgrundes gemäß des Schnittes A-A in Figur 3.

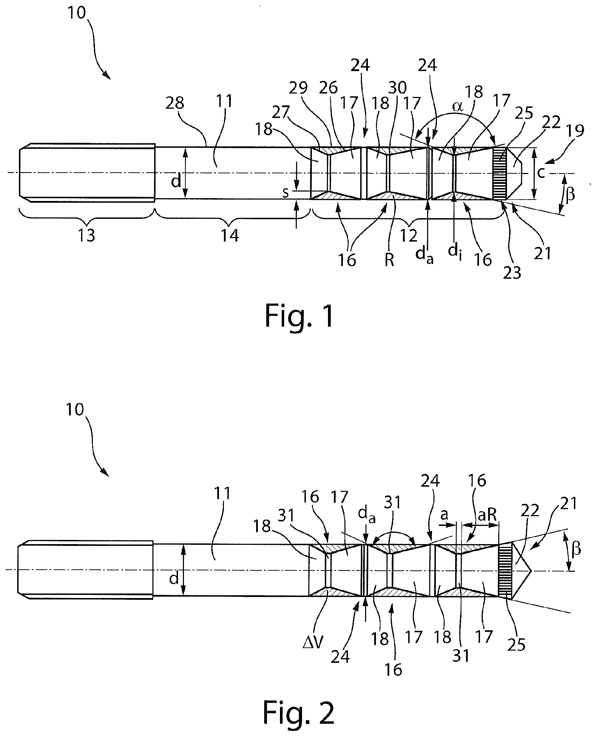

Figur 1 zeigt eine schematische Schnittansicht eines erfindungsgemäßen Verbundankers 10. Der Verbundanker 10 weist einen zylinderförmigen Schaft 11 auf, an welchem an einem Ende ein Verankerungsabschnitt 12 und an einem gegenüberliegenden Ende ein Befestigungsabschnitt 13 angeordnet sind. Zwischen dem Verankerungsabschnitt 12 und dem Befestigungsabschnitt 13 ist ein zylinderförmiger Distanzabschnitt 14 vorgesehen.

Der Verankerungsabschnitt 12 umfasst beispielsweise drei axial hintereinander angeordnete Einschnürungen 16, welche jeweils durch einen Konusabschnitt 17 und einen Gegenkonusabschnitt 18 gebildet sind. Dazu sind der Konusabschnitt 17 und der Gegenkonusabschnitt 18 paarweise, sich gegenüberliegend angeordnet, wobei die konusförmigen Abschnitte 17, 18 mit ihren geringsten Durchmessern dᵢ zueinander ausgerichtet sind und dadurch die Einschnürung 16 bilden. Der Konusabschnitt 17 und der Gegenkonusabschnitt 18 sind durch einen hyperbolischen Zylinderabschnitt 30 zueinander beabstandet. Der hyperbolische Zylinderabschnitt 30 weist eine konkave Seitenkante mit einem Krümmungsradius in einem Bereich von 0,5 mm bis 5 mm auf.

Zwischen zwei Einschnürungen 16 ist eine zylinderförmige Erweiterung 24 vorgesehen, welche durch zwei mit ihren größten Durchmessern gegeneinander liegenden Konus- und Gegenkonusabschnitten 17, 18 gebildet ist. Durch die zylinderförmige Erweiterung 24 ist eine axiale Beabstandung zwischen dem Konus- und Gegenkonusabschnitt 17, 18 erreicht.

Der Konus- und Gegenkonusabschnitt 17, 18 weisen eine Konusfläche 26 und eine Gegenkonusfläche 27 auf, durch welche ein Öffnungswinkel α zur Einschnürung 16 definiert ist. Dieser Öffnungswinkel α liegt in einem Winkelbereich von 135° bis 155°. Der Konusabschnitt 17 weist eine Steigung auf, bei welcher zu einer Längsachse des Verbundankers 10 ein Konuswinkel β zwischen 10° bis 20° gebildet ist.

Bezogen auf eine Mantelfläche 28 des Schafts 11 mit einem Schaftdurchmesser d weist die Einschnürung 16, von einem minimalsten Durchmesser dᵢ der Einschnürung 16 ausgehend, eine Einschnürungstiefe s auf. Das Verhältnis zwischen der Einschnürungstiefe s und dem minimalsten Durchmesser dᵢ der Einschnürung 16 liegt in einem Bereich von 0,1 bis 0,5.

Durch die Einschnürungstiefe s und den Öffnungswinkel α der Einschnürung 16 ist ein fiktives Ringvolumen ΔV definiert, welches zwischen den Konus- und Gegenkonusflächen 26, 27 und einer fiktiven Mantelfläche 29, die den Schaftdurchmesser d aufweist, gebildet ist. Zwischen dem fiktiven Ringvolumen ΔV und einem Raumvolumen V einer auf den Durchmesser des Verbundankers 10 angepassten Ausnehmung 32 ist ein Verhältnis von 0,05 bis 0,20 vorgesehen.

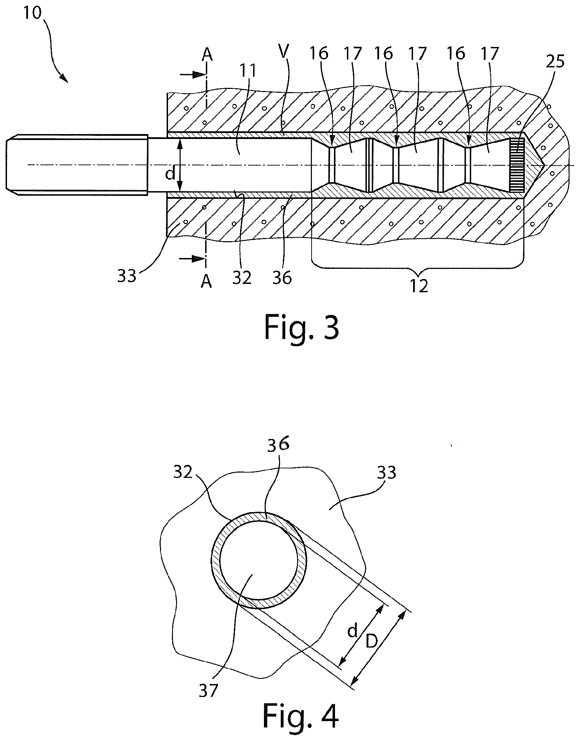

An einem Einsteckende 19 des Verbundankers 10 ist ein Endkopf 21 vorgesehen. Der Endkopf 21 weist eine in Einsteckrichtung des Verbundankers 10 ausgerichtete, kegelstumpfförmige Ankerspitze 22 auf, an welche sich ein zylinderförmiger Abschnitt 23 anschließt. Wie aus den Figuren 2 und 3 hervorgeht, kann die Ankerspitze 22 des Endkopfes 21 ebenso als kegelförmige Spitze, als ein zylinderförmiger Endkopf 21 oder auch als Schrägspitze ausgebildet sein. Die Mantelfläche des Endkopfes 21 weist vorzugsweise eine Rändelung 25 oder längs verlaufende Rillen oder Zähne auf, um bei einer Belastung mit einem Drehmoment ein Verdrehen oder Mitdrehen des Verbundankers 10 in der Verbundmasse 34 zu verhindern.

Der an den Endkopf 21 angrenzende Konusabschnitt 17 weist einen maximalen Durchmesser C auf, welcher einem Durchmesser des zylinderförmigen Abschnitts 23 des Endkopfes 21 entspricht. Zwischen dem Durchmesser C und dem Schaftdurchmesser d ist ein Verhältnis von 1,0 bis 1,2 vorgesehen.

Die durch die Konus- und Gegenkonusabschnitte 17, 18 gebildeten Erweiterungen 24 weisen bevorzugt den Schaftdurchmesser d auf, können jedoch ebenso den Durchmesser C des an den Endkopf 21 angrenzenden Konusabschnitts 17 oder jeweils verschiedene Durchmesser aufweisen.

In dem Befestigungsabschnitt 13 kann ein Gewinde 38 vorgesehen sein, sodass unterschiedliche nicht dargestellte Einrichtungen durch das Gewinde 38 an den Verbundanker 10 befestigbar sind.

Figur 2 zeigt eine Schnittansicht einer alternativen Weiterbildung des Verbundankers 10 gemäß Figur 1, wobei nachfolgend nur auf die Unterschiede zu Figur 1 eingegangen wird. Bei diesem Verbundanker 10 sind die beiden Konus- und Gegenkonusabschnitte 17, 18 der jeweiligen Einschnürung 16 durch einen zylinderförmigen Abschnitt 31 zueinander beabstandet. Der Durchmesser des zylinderförmigen Abschnitts 31 entspricht vorzugsweise dem minimalen Durchmesser dᵢ des Konus- bzw. Gegenkonusabschnitts 17, 18.

Zwischen einer axialen Länge a des zylinderförmigen Abschnitts 31 und einer axialen Länge aₖ des zu dem zylinderförmigen Abschnitt 31 benachbarten Konusabschnitts 17 ist ein Verhältnis vorgesehen, welches kleiner 0,5 ist.

Bei dieser alternativen Weiterbildung des Verbundankers 10 sind vom Einsteckende 19 ausgehend, zunehmend größer werdende Durchmesser dᵢ der jeweiligen Einschnürungen 16 vorgesehen. Der maximale Durchmesser dₐ der Erweiterungen 24 entspricht vorzugsweise dem Durchmesser d des Schafts 11.

Die Ankerspitze des Endkopfes 21 des Verbundankers 10 gemäß Figur 2 ist beispielsweise als Dachspitze ausgebildet.

Figur 3 zeigt ein Verbundankersystem zur Verankerung des Verbundankers 10 in einer Ausnehmung 32, insbesondere in einem Bohrloch, das maschinell hergestellt ist. Die Ausnehmung 32 ist in einem Befestigungsgrund 33 vorgesehen. Der Befestigungsgrund 33 kann beispielsweise aus Beton ausgebildet sein. Der Verbundanker 10 ist in der Ausnehmung 32 durch eine aushärtbare Verbundmasse 34, beispielsweise ein Kunststoff, Kunstharz oder eine Mörtelmasse, gehalten. Dazu umschließt die Verbundmasse 34 den Verankerungsabschnitt 12 des Verbundankers 10 und bildet durch das Aushärten eine feste Verbindung zwischen dem Verbundanker 10 und der Ausnehmung 32.

Bei einer entgegen der Einsteckrichtung gerichteten Zugbelastung des Verbundankers 10 wird die Verbundmasse 34 insbesondere im Bereich der Einschnürungen 16 des Verankerungsabschnitts 12 durch die Konusabschnitte 17 radial nach außen und somit gegen die Wandung der Ausnehmung 32 aufgeweitet, wodurch eine formschlüssige Verbindung zwischen dem Verbundanker 10 und der Ausnehmung 32 geschaffen ist.

Figur 4 zeigt eine Schnittansicht des Verbundankersystems gemäß des Schnittes A-A aus Figur 3. Aus dieser Darstellung geht hervor, dass zwischen dem Verankerungsabschnitt 12 des Verbundankers 10 und der Ausnehmung 32 eine Ringspaltfläche 36 gebildet ist, wobei zwischen der Ringspaltfläche 36 und einer Querschnittsfläche 37 des Schafts 11 ein Verhältnis von 0,1 bis 0,3 vorgesehen ist. Durch dieses Verhältnis ist trotz eines geringen Einsatzes von Verbundmasse 34 eine besonders haltbare Verbindung zwischen dem Verbundanker 10 und der Ausnehmung 32 geschaffen.

## Patentansprüche

1. Verbundanker (10) zur Verankerung in einer Ausnehmung (32) eines Befestigungsgrundes (33) mittels einer aushärtbaren Verbundmasse (34), bestehend aus einem Schaft (11), welcher zu einem Einsteckende (19) hin einen Verankerungsabschnitt (12) und an einem dem Einsteckende (19) gegenüberliegenden Ende einen Befestigungsabschnitt (13) aufweist, wobei der Verankerungsabschnitt (12) wenigstens einen Konusabschnitt (17) und einen Gegenkonusabschnitt (18) aufweist, die gegensätzlich zueinander ausgerichtet sind und eine dazwischen liegende Einschnürung (16) bilden und wenigstens jeweils zwei sich paarweise einander gegenüberstehende Konus- und Gegenkonusabschnitte (17, 18) vorgesehen sind, **dadurch gekennzeichnet,**
- **dass** der Konusabschnitt (17) und der Gegenkonusabschnitt (18) einen Öffnungswinkel zur Einschnürung (16) im Bereich von 140° bis 155° bilden.

2. Verbundanker nach Anspruch 1, **dadurch gekennzeichnet, dass** der Konusabschnitt (17) und der Gegenkonusabschnitt (18) einen Öffnungswinkel im Bereich von 142° bis 152° bilden.

3. Verbundanker nach Anspruch 1, **dadurch gekennzeichnet, dass** die Einschnürung (16) durch einen zylinderförmigen Abschnitt (31) gebildet ist und ein Verhältnis zwischen einer axialen Länge a des zylinderförmigen Abschnitts (31) der Einschnürung (16) und einer axialen Länge aₖ des Konusabschnitts (17) von kleiner 0,5 vorgesehen ist.

4. Verbundanker nach Anspruch 1, **dadurch gekennzeichnet, dass** die Einschnürung (16) durch einen hyperbolischen Zylinderabschnitt (30) gebildet ist, der vorzugsweise einen Flankenradius R in einem Bereich von 0,5 mm bis 5 mm aufweist.

5. Verbundanker nach Anspruch 1, **dadurch gekennzeichnet, dass** zwischen zwei benachbarten Einschnürungen (16) gegeneinander liegende Konus- und Gegenkonusabschnitte (17, 18) eine zylinderförmige Erweiterung (24) bilden, welche vorzugsweise einem maximalen Durchmesser des Schafts (11) entspricht.

6. Verbundanker nach Anspruch 1, **dadurch gekennzeichnet, dass** zwischen einer von der fiktiven Mantelfläche (29) des Schafts (11) ausgehenden radialen Einschnürungstiefe s der Einschnürung (16) und einem Durchmesser dᵢ der Einschnürung (16) ein Verhältnis im Bereich von 0,1 bis 0,5 gebildet ist.

7. Verbundanker nach Anspruch 1, **dadurch gekennzeichnet, dass** zwischen einem maximalen Durchmesser des Konusabschnitts (17), welcher benachbart zum Einsteckende (19) des Schafts (11) angeordnet ist, und dem Durchmesser des Schafts (11) ein Verhältnis im Bereich von 1,0 bis 1,2 gebildet ist.

8. Verbundanker nach Anspruch 1, **dadurch gekennzeichnet, dass** die minimalen Durchmesser der Konusabschnitte (17) und/oder Gegenkonusabschnitte (18) zum Einsteckende (19) des Schafts (11) hin abnehmen.

9. Verbundanker nach Anspruch 1, **dadurch gekennzeichnet, dass** der maximale Durchmesser der Konusabschnitte (17) und/oder Gegenkonusabschnitte (18) jeweils gleich groß ist.

10. Verbundanker nach Anspruch 1, **dadurch gekennzeichnet, dass** ein axialer Konuswinkel β der Konusabschnitte (17) und/oder Gegenkonusabschnitte (18) in einem Bereich von 10° bis 20° liegt, vorzugsweise im Bereich von 11° bis 15°.

11. Verbundanker nach Anspruch 1, **dadurch gekennzeichnet, dass** an einem Endkopf (21) oder an wenigstens einer Erweiterung (24) des Verankerungsabschnitts (12) eine Rändelung (25), längs verlaufende Rillen oder Zähne vorgesehen sind.

12. Verbundanker nach Anspruch 1, **dadurch gekennzeichnet, dass** zumindest der Verankerungsabschnitt (12), vorzugsweise der gesamte Verbundanker (10) eine Beschichtung oder Ummantelung aufweist.

13. Verbundankersystem zur Verankerung eines Verbundankers (10) in einer Ausnehmung (32) eines Befestigungsgrundes (33), insbesondere mit einem Verbundanker (10) nach einem der Ansprüche 1 bis 11 in einem Bohrloch eines Befestigungsgrundes (33) aus Beton, **dadurch gekennzeichnet, dass** zwischen einem fiktiven Ringvolumen ΔV des Verbundankers (10), welches einem Raumvolumen zwischen einer Mantelfläche eines Konusabschnitts (17), eines Gegenkonusabschnitts (18) und einer Einschnürung (16) sowie einer fiktiven Mantelfläche (29) eines Schafts (11) des Verbundankers (10) im Bereich der Einschnürung (16) entspricht, und einem Bohrlochvolumen V, welches durch die durch die Größe des Verbundankers (10) vorgegebene Ausnehmung (32) bestimmt ist, ein Verhältnis im Bereich von 0,05 bis 0,20 gebildet ist.

14. Verbundankersystem nach Anspruch 13 **dadurch gekennzeichnet, dass** zwischen einer Ringspaltfläche (36), welche zwischen dem Schaft (11) eines Distanzabschnitts (14) des Verbundankers (10) und der vorgegebenen Ausnehmung (32) gebildet ist, und einer Querschnittsfläche (37) des Schafts (11) des Verbundankers (10) ein Verhältnis im Bereich von 0,1 bis 0,3 gebildet ist.

## Claims

1. A composite anchor (10) to be anchored in a recess (32) of a mounting base (33) by means of a curable composite mass (34), consisting of a shaft (11) which has an anchoring portion (12) located towards an insertion end (19) and a mounting portion (13) located towards an end opposite to said insertion end (19), the anchoring portion (12) having at least one cone portion (17) and one counter-cone portion (18) which are oriented in a manner opposing each other and forming a constriction (16) therebetween, and there being provided at least two cone portions and counter-cone portions (17, 18), respectively opposing each other by pairs, **characterised in that**
- the cone portion (17) and the counter-cone portion (18) form with respect to the constriction (16) an opening angle in a range of between 140° and 155°.

2. The composite anchor as claimed in claim 1, **characterised in that** the cone portion (17) and the counter-cone portion (18) form an opening angle in a range of between 142° and 152°.

3. The composite anchor as claimed in claim 1, **characterised in that** the constriction (16) is formed by a cylindrical portion (31) and provision is made for a ratio between an axial length a of the cylindrical portion (31) of the constriction (16) and an axial length aₖ of the cone portion (17) to be smaller than 0.5.

4. The composite anchor as claimed in claim 1, **characterised in that** the constriction (16) is formed by a hyperbolic cylinder portion (30) which preferably has a flank radius R in a range of between 0.5 mm and 5 mm.

5. The composite anchor as claimed in claim 1, **characterised in that** adjoining cone and counter-cone portions (17, 18) located between two adjacent constrictions (16) form a cylindrical enlargement (24) which preferably corresponds to a maximum diameter of the shaft (11).

6. The composite anchor as claimed in claim 1, **characterised in that** between a constriction depth s of the constriction (16) as measured from an imaginary lateral wall (29) of the shaft (11) and a diameter dᵢ of the constriction (16), a ratio in a range of between 0.1 and 0.5 is formed.

7. The composite anchor as claimed in claim 1, **characterised in that** between a maximum diameter of the cone portion (17) disposed adjacent to the insertion end (19) of the shaft (11) and the diameter of the shaft (11), a ratio in a range of between 1.0 and 1.2 is formed.

8. The composite anchor as claimed in claim 1, **characterised in that** the minimum diameters of the cone portions (17) and/or the counter-cone portions (18) decrease towards the insertion end (19) of the shaft (11).

9. The composite anchor as claimed in claim 1, **characterised in that** the maximum diameters of the cone portions (17) and/or the counter-cone portions (18) are all of the same size.

10. The composite anchor as claimed in claim 1, **characterised in that** an axial cone angle β of the cone portions (17) and/or the counter-cone portions (18) is in a range of between 10° and 20°, preferably in a range of between 11° and 15°.

11. The composite anchor as claimed in claim 1, **characterised in that** on a terminal head (21) or on at least one enlargement (24) of the anchoring portion (12), a knurl (25), longitudinal grooves or teeth are provided.

12. The composite anchor as claimed in claim 1, **characterised in that** at least the anchoring portion (12), preferably the entire composite anchor (10), has a coating or an envelope.

13. A composite anchor system for anchoring a composite anchor (10) in a recess (32) of a mounting base (33), in particular using a composite anchor (10) as claimed in any one of claims 1 to 11 in a drill hole of a concrete mounting base (33), **characterised in that** between an imaginary annular volume ΔV of the composite anchor (10) corresponding to a volume of space enclosed between a lateral surface of a cone portion (17), a counter-cone portion (18) and a constriction (16), respectively, and an imaginary lateral surface (29) of a shaft (11) of the composite anchor (10) in the area of a constriction (16), on the one hand, and a drill-hole volume V which is determined by the recess (32) defined by the size of the composite anchor (10), on the other, a ratio in a range of between 0.05 and 0.20 is formed.

14. The composite anchor system as claimed in claim 13, **characterised in that** between an annular gap surface (36) which is formed between the shaft (11) of a spacer portion (14) of the composite anchor (10) and the defined recess (32), on the one hand, and a cross-sectional surface (37) of the shaft (11) of the composite anchor (10), on the other, a ratio in a range of between 0.1 and 0.3 is formed.

## Revendications

1. Élément d'ancrage composite (10) destiné à être ancré dans un évidement (32) ménagé dans un support de fixation (33) au moyen d'une masse composite durcissable (34) et constitué par une tige (11) qui présente, à une extrémité d'emmanchement (19), une partie d'ancrage (12) et, à une extrémité située à l'opposé de l'extrémité d'emmanchement (19), une partie de fixation (13), la partie d'ancrage (12) présentant au moins une partie de cône (17) et une partie de contre-cône (18) qui sont orientées de manière à être opposées l'une à l'autre et qui forment entre elles un rétrécissement (16), et étant prévues au moins deux parties respectives de cône et de contre-cône (17, 18) qui se font face deux à deux, **caractérisé en ce que**,
- la partie de cône (17) et la partie de contre-cône (18) forment, du côté du rétrécissement (16), un angle d'ouverture compris entre 140° et 155°.

2. Élément d'ancrage composite selon la revendication 1, **caractérisé en ce que** la partie de cône (17) et la partie de contre-cône (18) forment un angle d'ouverture compris entre 142° et 152°.

3. Élément d'ancrage composite selon la revendication 1, **caractérisé en ce que** le rétrécissement (16) est formé par une partie cylindrique (31) et **en ce qu'**entre une longueur axiale a de la partie cylindrique (31) du rétrécissement (16) et une longueur axiale aₖ de la partie de cône (17) est prévu un rapport inférieur à 0,5.

4. Élément d'ancrage composite selon la revendication 1, **caractérisé en ce que** le rétrécissement (16) est formé par une partie cylindrique hyperbolique (30) qui présente de préférence un rayon sur flanc R compris entre 0,5 mm et 5 mm.

5. Élément d'ancrage composite selon la revendication 1, **caractérisé en ce que** des parties de cône et de contre-cône (17, 18) adjacentes situées entre deux rétrécissements voisins (16) forment un élargissement cylindrique (24) qui correspond à un diamètre maximal de la tige (11).

6. Élément d'ancrage composite selon la revendication 1, **caractérisé en ce qu'**entre une profondeur s du rétrécissement (16) prise à partir de la surface latérale fictive (29) de la tige (11) et un diamètre dᵢ dudit rétrécissement (16) existe un rapport compris entre 0,1 et 0,5.

7. Élément d'ancrage composite selon la revendication 1, **caractérisé en ce qu'**entre un diamètre maximal de la partie de cône (17) disposée de manière contiguë à l'extrémité d'emmanchement (19) de la tige (11) et le diamètre de la tige (11) existe un rapport compris entre 1,0 et 1,2.

8. Élément d'ancrage composite selon la revendication 1, **caractérisé en ce que** les diamètres minimaux des parties de cône (17) et/ou des parties de contre-cône (18) vont en diminuant vers l'extrémité d'emmanchement (19) de la tige (11).

9. Élément d'ancrage composite selon la revendication 1, **caractérisé en ce que** les diamètres maximaux des parties de cône (17) et/ou des parties de contre-cône (18) sont respectivement égaux.

10. Élément d'ancrage composite selon la revendication 1, **caractérisé en ce qu'**un angle de cône axial β des parties de cône (17) et/ou des parties de contre-cône (18) est compris entre 10° et 20°, de préférence entre 11° et 15°.

11. Élément d'ancrage composite selon la revendication 1, **caractérisé en ce qu'**un moletage (25), des rainures longitudinales ou des dents sont prévus au niveau d'une tête terminale (21) ou au moins au niveau d'un élargissement (24) de la partie d'ancrage (12).

12. Élément d'ancrage composite selon la revendication 1, **caractérisé en ce qu'**au moins la partie d'ancrage (12), de préférence l'ensemble de l'élément d'ancrage composite (10), présente un revêtement ou une gaine.

13. Système d'ancrage composite destiné à ancrer un élément d'ancrage composite (10) dans un évidement (32) ménagé dans un support de fixation (33), en particulier avec un élément d'ancrage composite (10) selon l'une quelconque des revendications 1 à 11, et ce dans un trou percé dans un support de fixation (33) en béton, **caractérisé en ce qu'**entre un volume annulaire fictif ΔV de l'élément d'ancrage composite (10), lequel correspond à un volume spatial entre une surface latérale d'une partie de cône (17), d'une partie de contre-cône (18) et d'un rétrécissement (16) ainsi qu'une surface latérale fictive (29) d'une tige (11) de l'élément d'ancrage composite (10) dans la zone du rétrécissement (16), et un volume de trou V qui est déterminé par l'évidement (32) prédéfini par la grandeur de l'élément d'ancrage composite (10), existe un rapport compris entre 0,05 et 0,20.

14. Système d'ancrage composite selon la revendication 13, **caractérisé en ce qu'**entre une surface de fente annulaire (36) qui est formée entre la tige (11) au niveau d'une partie d'écartement (14) de l'élément d'ancrage composite (10) et l'évidement prédéfini (32) et une surface de la section transversale (37) de la tige (11) de l'élément d'ancrage composite (10) existe un rapport compris entre 0,1 et 0,3.
